# EUROPEAN PATENT APPLICATION

(11) **EP 3 570 493 A1**
(43) Date of publication of application: **20.11.2019**
(21) Application number: 19173584.4
(22) Date of filing: 09.05.2019
(51) Int. Cl.: H04L 12/24

(54) **SYSTEMS AND METHODS FOR CONTEXT BASED MULTI-DIMENSIONAL NETWORK VISUALIZATION**

(30) Priority: 17.05.2018 US 201862673000 P; 30.10.2018 US 201816175524
(71) Applicant: Avago Technologies International Sales Pte. Limited, Singapore 768923 (SG)
(72) Inventor: Lekshmanan, MuthuKumaran, San Jose, CA 95131 (US); Levchenko, George, San Jose, CA 95131 (US)
(74) Representative: Bosch Jehle Patentanwaltsgesellschaft mbH

(57) **Abstract**

A system for providing network visualization generates one or more contexts for a user to select. The system receives a first context from the user. The system generates a user interface for displaying a first topology view for the first context. The topology view incudes a context centric connectivity view component, a context centric anomaly view component, and an entity centric key metric view component.

## Description

This application claims the benefit of and priority to U.S. Provisional Application No. 62/673,000, filed May 17, 2018, which is hereby incorporated reference herein in its entirety.

This disclosure generally relates to systems and methods for network visualization including but not limited to context based multi-dimensional network visualization.

Network topology views can be used as tools for planning, administering, monitoring, investigating, and troubleshooting performance of a storage area network (SAN) infrastructure including servers, storage units and applications. The network topology views generally focus on providing generic physical network connectivity views of a SAN or other networks. While the generic physical network connectivity views are useful for understanding the network topology, conventional systems often provide limited information which may not be sufficient to monitor and understand the health, utilization, availability, and performance of the applications that are enabled by the SAN.
According to an aspect of the invention, a system for providing network visualization comprises:
one or more processors configured to:
generate one or more contexts for a user to select;
receive a first context from the user; and
generate a user interface for displaying a first topology view for the first context, wherein the first topology view comprises a context centric connectivity view component, a context centric anomaly view component, and an entity centric key metric view component.
Advantageously, the one or more contexts comprises fabric, zone, switch, switch port, host, host port, storage, storage port, virtual machine, data center, flor/port collections, initiator target (IT) Flow, fiber channel over IP protocol (FCIP) Tunnel.
Advantageously, the first topology view comprises one or more entities associated with the first context.
Advantageously, the context centric connectivity view component displays the one or more entities, properties of the one or more entities, connections between the one or more entities of the first context and one or more other entities, traffic flow/utilization, alarm badges, and/or health score.
Advantageously, the one or more other entities belong to a different context.
Advantageously, the one or more processors are configured to:
receive a user request to display a second topology view from the perspective of an entity of the first context; and
switch, at the user interface, from the first topology view to the second topology view.
Advantageously, the one or more processors are configured to:
receive a user request to display a third topology view from the perspective of an entity of a second context; and
switch, at the user interface, from the first topology view to the third topology view.
Advantageously, the context centric anomaly view component displays one or more anomalies associated with the first context, wherein the one or more anomalies comprise anomalous entities, trends, and patterns.
Advantageously, the entity centric key metrics view component displays summary and spark lines for key metrics, event summaries, and health details for the one or more entities.
According to an aspect, a system for providing network visualization is provided, comprising:
one or more processors configured to:
generate a plurality of context types for a user to select;
receive a first context of a first context type from the user;
generate a first user interface for displaying a first topology view from the perspective of the first context;
receive a second context of the first context type from the user; and
generate a second user interface for displaying a second topology view from the perspective of the second context.
Advantageously, the plurality of context types comprises fabric, zone, switch, switch port, host, host port, storage, storage port, virtual machine, data center, flor/port collections, initiator target (IT) Flow, fiber channel over IP protocol (FCIP) Tunnel.
Advantageously, the one or more processors are configured to:
receive a third context of a second context type from the user; and
generate a third user interface for displaying a third topology view from the perspective of the third context.
Advantageously, each of the first, second, and third topology views comprises one or more entities, wherein each of the one or more entities is associated with a context.
Advantageously, the one or more processors are configured to:
for each entity,
monitor and measure network performance; and
in response to determining a bad network connection, generate and display an alert and/or waring sign at the entity.
According to an aspect, one or more computer-readable storage media are provided having instructions stored thereon that, when executed by one or more processors, cause the one or more processors to perform operations comprising:
generating one or more contexts for a user to select;
receiving a first context from the user; and
generating a user interface for displaying a first topology view for the first context, wherein the first topology view comprises a context centric connectivity view component, a context centric anomaly view component, and an entity centric key metric view component.
Advantageously, the one or more contexts comprises fabric, zone, switch, switch port, host, host port, storage, storage port, virtual machine, data center, flor/port collections, initiator target (IT) Flow, fiber channel over IP protocol (FCIP) Tunnel.
Advantageously, the first topology view comprises one or more entities associated with the first context.
Advantageously, the context centric connectivity view component displays the one or more entities, properties of the one or more entities, connections between the one or more entities of the context and one or more other entities, traffic flow/utilization, alarm badges, and health score.
Advantageously, the context centric anomaly view component displays one or more anomalies associated with the first context, wherein the one or more anomalies comprise anomalous entities, trends, and patterns.
Advantageously, the entity centric key metrics view component displays summary and spark lines for key metrics, event summaries, and health details for the one or more entities.

### BRIEF DESCRIPTION OF THE DRAWINGS

Various objects, aspects, features, and advantages of the disclosure will become more apparent and better understood by referring to the detailed description taken in conjunction with the accompanying drawings, in which like reference characters identify corresponding elements throughout. In the drawings, like reference numbers generally indicate identical, functionally similar, and/or structurally similar elements.
FIG. 1 is a schematic drawing of a screen shot of a user interface for adding context type for context topology views according to some embodiments;
FIG. 2 is a schematic drawing of a screen shot of a user interface for selecting a host context for context topology views according to some embodiments;
FIG. 3 is a schematic drawing of a screen shot of a user interface for displaying a host context topology view according to some embodiments;
FIG. 4 is a schematic drawing of a screen shot of a user interface for displaying a host context view of FIG. 3 according to some embodiments;
FIG. 5 is a schematic drawing of a screen shot of a user interface for displaying drill down and/or drill up network topology of an entity within a network topology according to some embodiments;
FIG. 6 is a schematic drawing of a screen shot of a user interface for displaying a fabric context topology view according to some embodiments;
FIG. 7 is a schematic drawing of a screen shot of a user interface for displaying a fabric context topology view according to some embodiments;
FIG. 8 is a schematic drawing of a screen shot of a user interface for displaying a fabric context topology view according to some embodiments;
FIG. 9 is a schematic drawing of a screen shot of a user interface for displaying a zone context topology view according to some embodiments;
FIG. 10 is a schematic drawing of a screen shot of a user interface for displaying a switch context topology view according to some embodiments;
FIG. 11 is a schematic drawing of a screen shot of a user interface for displaying a switch port context topology view according to some embodiments;
FIG. 12 is a schematic drawing of a screen shot of a user interface for displaying a host port context topology view according to some embodiments;
FIG. 13 is a schematic drawing of a screen shot of a user interface for displaying a storage context topology view according to some embodiments;
FIG. 14 is a schematic drawing of a screen shot of a user interface for displaying a storage port context topology view according to some embodiments;
FIG. 15 is a schematic drawing of a screen shot of a user interface for providing information of a user selected context in a network according to some embodiments; and
FIG. 16 is a schematic drawing of a screen shot of a user interface for displaying a switch expansion view in a fiber channel over IP protocol (FCIP) Tunnel according to some embodiments.

The details of various embodiments of the methods and systems are set forth in the accompanying drawings and the description below.

### DETAILED DESCRIPTION

Before turning to the features, which illustrate the exemplary embodiments in detail, it should be understood that the application is not limited to the details or methodology set forth in the description or illustrated in the figures. It should also be understood that the terminology is for the purpose of description only and should not be regarded as limiting.

Referring generally to the figures, endowments of systems and methods described herein provide smart adaptive physical and logical topology views of the SAN infrastructure that abstract out the underlying complexity and details and provide focused contextual multidimensional views for application-aware SAN infrastructure performance monitoring for administrators. These context based views facilitate understanding of not just connectivity but also health, utilization, availability, and performance, and enable seamless end-to-end monitoring and troubleshooting in some embodiments. The systems and methods provide the ability to monitor and understand the health, utilization, availability, and performance of the applications that are enabled by the SAN even as the size and complexity of the SAN increases in some embodiments.

The present disclosure provides an advantageous approach, build, and use case for smart adaptive network topology views that are context based according to some embodiments. The present disclosure discloses systems and methods for providing focused, relevant, and contextual multidimensional views of the infrastructure that are specific to and intelligently tailored for various contexts from which the user views network topology according to some embodiments.

The context centric topology view approach provided by the systems and methods enables the creation of simplified yet insightful topology views for various physical and logical contexts according to some embodiments. The systems and methods further provide understanding of not just connectivity but also health, utilization, availability, and performance from the perspective of the context according to some embodiments. In addition, the systems and methods also provide ways to introduce various seamless navigation and integration workflows that are intended to greatly simplify configuration, issue identification, and troubleshooting use cases according to some embodiments.

In the present disclosure, a context defines an abstraction according to some embodiments. For example, the context can include Fabric, Zone, Switch, Switch Port, Host, Host Port, Storage, Storage Port, virtual machine (VM), Data Center, Flow/Port Collections, initiator target (IT) Flow, fiber channel over IP protocol (FCIP) Tunnel, etc. Systems and methods provide physical and logical context based topology views for each context according to some embodiments. With context based topology views, network topology is viewed in a specific context according to some embodiments.

The topology view for each context has at least one of four types of logical components as described below in some embodiments. The four types of logical components are: 1. A context centric connectivity view component (e.g., provides context specific, simplified, high level topology views and/or displays the various relevant associated entities for the context, their properties, connectivity/links/relationships, traffic flow/utilization, alarm badges and calculated health based on health score (health decoration); 2. Connectivity entity view components which are physical/logical abstractions of network elements/components that enable providing layered, hierarchal and intuitive customizable connectivity views (e.g. allows a user to search entities and/or easily drill down/drill up using static and dynamic filtered drill-downs/drill-ups and view/review elements at multiple levels of granularity on the fly); 3. Context centric anomaly view components (e.g., displays current and severe anomalies relevant for the context including anomalous entities, trends, patterns, etc. and relevant suggestions, tips, and hints, if any, for next steps); and 4. An entity centric key metrics view component (e.g., displays summary and spark lines for key metrics along with event summaries and health details for the various chosen entities).

The systems and methods utilize all four logical components in some embodiments. The four logical components as described above enable the creation of simplified, meaningful, and multidimensional live topology views which simplify the network management and monitoring according to some embodiments. The simplified, meaningful, and multidimensional live topology views seamlessly bring together the disparate data from different related entities based on the physical, logical or aggregated context according to some embodiments. The simplified, meaningful, and multidimensional live topology views enrich the disparate data with various indicative data like entity health, summary, trends of key utilization and performance metrics, and detected/inferred alarms and anomalies according to some embodiments. The simplified, meaningful, and multidimensional live topology views therefore provide a holistic picture of health, utilization, availability and performance that is specific and filtered for the given context according to some embodiments.

The systems and methods for context based multi-dimensional network visualization also provide context navigation according to some embodiments. The systems and methods enable a user to navigate from the topology view for a context to different related contexts and view the corresponding context centric topology according to some embodiments. The systems and methods also enable the user to navigate back and forth between contexts using a 'bread crumbs' style navigation component that holds the different contexts navigated by the user according to some embodiments. For example, if viewing topology in a fabric context, the user can choose to change context to a particular switch, host, storage, collection, zone, etc., and navigate back and forth between them according to some embodiments. This enables seamless navigation between related contexts according to some embodiments.

The context centric views combined with intelligent context navigation provided by the systems and methods of the present disclosure provide as much relevant information as possible within context in topology and avoid going back and forth between different modules/pages according to some embodiments.

The systems and methods for context based multi-dimensional network visualization also provide context customization and sharing according to some embodiments. The systems and methods enable a user to customize the views and save them for future viewing in addition to launching and viewing the default topology views for various contexts according to some embodiments. Apart from saving the views, users are also able to share these custom contexts as topology definitions with other users according to some embodiments.

The systems and methods for context based multi-dimensional network visualization also provide integration workflows according to some embodiments. Besides direct live monitoring of the SAN infrastructure, context based topology views also lend themselves well to various configuration, investigation, and troubleshooting workflows that enables seamless context driven end-to-end network infrastructure monitoring and troubleshooting according to some embodiments. Exemplary workflows include one or more of: 1. Simplified zoning (e.g., the user can create and configure a zone simply by visually selecting devices from a fabric context topology view.); 2. Device performance (Oversubscription, Slow drain device, etc.) troubleshooting (e.g., the user can trigger troubleshooting from a host, zone or fabric context topology view and easily and quickly identify device performance issues caused by oversubscription, credit loss, slow drain devices, victims of slow drain devices, etc.); 3. Investigating (e.g., the user can select and investigate historical and real time performance for switches, ports, flows, collections, hosts, etc. from host, zone, fabric or any other corresponding context topology view.); 5. Capacity and performance planning (e.g., capacity and performance planning can be made easier with the connectivity, anomaly and key metrics view components helping the user answer questions like 'Can I add a new host to increase application performance?', 'Is this LUN used at its maximum capacity?' or 'I am seeing performance issues with this LUN, do I need to provision it with better storage?', etc.); 6. Meta-SAN and logical SAN (LSAN) monitoring (e.g., monitoring and management of routed SAN topologies in the infrastructure become simplified and easier to understand and troubleshoot with adaptive fabric context topology views, and the various LSANs and their connectivity in the Meta-SAN become simplified through adaptive zone context topology views and intelligent context navigations between fabric and zone context topology views.); and 7. Multipath monitoring (e.g., Multipath monitoring can seamlessly be done with host or storage context topology views helping the user answer questions like 'if path failure happens, would my application be impacted? would it failover or will it slow down?' etc.).

The systems and methods for context based multi-dimensional network visualization can be used to visualize topology for various contexts associated with Meta-San and LSAN monitoring (Fiber Channel Routing) according to some embodiments. For example, when a user chooses fabric context type and selects backbone fabric as context, the systems generate a backbone fabric topology view displaying a topology view including the backbone fabric along with all its connected edge fabric(s) according to some embodiments. In some embodiments, in the backbone fabric topology view, the backbone fabric is expanded with all its connections and all the edge fabrics are collapsed by default. When a user chooses fabric context type and selects an edge fabric as context, the systems generate an edge fabric topology view displaying a topology view including the edge fabric along with its connected backbone fabric(s) according to some embodiments. In some embodiments, in the edge fabric topology view, the edge fabric is expanded with all its connections and backbone fabrics are collapsed by default. In some embodiments, other edge fabrics connected to the backbone fabrics are not displayed. When a user chooses backbone switch context type and selects a backbone switch as context, the systems generate a backbone switch topology view displaying a topology view including the backbone switch along with its connected edge faric(s) according to some embodiments. In some embodiments, in the backbone switch topology view, the edge fabric(s) are collapsed by default. When a user chooses edge switch context type and selects an edge switch as context, the systems generate an edge switch topology view displaying a topology view including the edge switch and its connected backbone fabric(s) according to some embodiments. In some embodiments, in the edge switch topology view, the backbone fabric(s) are collapsed and other edge fabrics connected to the back bone fabrics are not displayed be default. When a user chooses zone context type and selects an LSAN zone as context, the systems generate a LSAN zone topology view displaying a topology view including the zone's member end devices along with their immediately connected switches and associated fabrics(s) present in bot edge and/or backbone according to some embodiments. In some embodiments, in the LSAN zone topology view, rest of the edge and backbone fabrics are collapsed if the fabric (e.g., edge or backbone) has no member end device in the zone. In some embodiments, the collapsed edge and backbone fabrics can be drilled-down and expanded as needed.

In some embodiments, the system and methods for context based multidimensional network visualization can be used to visualize topology for various contexts associated with multipath monitoring. For example, when a user chooses host context type and selects a multipath involved host as context, the systems generate a multipath involved host topology view displaying a topology view including the host along with all its connected or visible storage(s) across the multipath fabric(s) (present in both edge and/or backbone) edge fabric(s) according to some embodiments. In some embodiments, in the multipath involved host topology view, the fabrics with no connected/visible devices are fully collapsed and the ones with the host and storages in question have their immediately connected switches displayed with the rest of the fabric collapsed. When a user chooses storage context type and selects a multipath involved storage as context, the systems generate a multipath involved storage topology view displaying a topology view including the storage along with its connected/visible host(s) across the multipath fabric(s) (present in both edge and/or backbone) according to some embodiments. In some embodiments, in the multipath involved storage topology view, the fabrics with no connected/visible devices are fully collapsed and the ones with the host and storages in question have their immediately connected switches displayed with the rest of the fabric collapsed.

In some embodiments, the systems and methods for context based multidimensional network visualization can be used to visualized topology for various contexts associated with application server monitoring. For example, when a user creates a host group from inventory page that corresponds to an application server and chooses host context type, and selects the created host group as context, the systems generates a host group topology view displaying a topology view including the host group and its connected/visible storages across the fabric(s) present in both edge and/or backbone according to some embodiments.

In some embodiments, the systems and methods for context based multidimensional network visualization enable simplified zoning. For example, when a user chooses fabric context type, and selects a fabric for which to configure a zone, the systems enable the user to choose whether to show connected devices as needed according to some embodiments. In some embodiments, the systems create and configured the zone simply by visually selecting devices from a connectivity view.

In some embodiments, the systems and methods for context based multidimensional network visualization can be used to provide device performance troubleshooting (e.g., oversubscription, slow drain device, etc.). For example, the systems enable a user to select an option to view trouble shooting results in topology or initiate troubleshooting of entities from a connectivity view according to some embodiments. In some embodiments, the topology connectivity view visually highlights the identified culprit and victim flows based on the troubleshooting results in addition to providing relevant key metrics and anomalies.

Referring generally to the figures, examples of connectivity views are described below according to some embodiments. The connectivity views are combined with the corresponding complementary context centric anomaly views and entity centric key metrics views for each context to provide a holistic picture of connectivity, health, utilization, availability, and performance that is specific and filtered for the given context according to some embodiments. The systems and methods of the present disclosure provide the connectivity view for any topology context, which incorporate multiple operations. Exemplary viewing operations include one or more of: 1. viewing the entire connectivity (e.g., Size is automatically being shrunk/fit based on the size of the connectivity graph, and any section of the connectivity view can be zoomed in or out to view it more clearly; 2. viewing/visualizing traffic flow/utilization on the connectivity links (can be toggled on/off); 3. visually tracking switches, connections and devices; 4. accepting tracking changes for context (e.g., from the displayed/indicated added/removed switches, connections and devices); 5. exporting the displayed topology which includes the connectivity view, anomalies and key metrics; 6. selecting entities to drill-down or drill-up (based on invocation context) (e.g., from any switch, host or storage entity in the connectivity view, the user can drill-down and display its ports, and from any fabric entity, the user can drill-down, display its switches, devices and connectivity links, and drill down and look at the underlying connectivity link details (Trunk, FCIP Tunnel and Circuits, IFL/ICL/ISL, etc.), the drilldowns and drill-ups are static or dynamically filtered, and entities can be expanded or collapsed individually); 7. selecting an entity and change context to it; 8. from any fabric, switch, host, storage or connectivity link entity in the connectivity view, selecting and changing context to it and display the corresponding topology centric to it (e.g., when a switch is selected, the user will have the option to change context to that switch or one of the switch, port or flow collections that it is involved in, and display its corresponding context centric topology); 9. selecting an entity for investigation or add it to the selected items cache; 10. selecting and viewing the properties for any entity; and10. selecting an entity and view its status, health details, current and emergent anomalies, key metrics, relevant suggestions, tips and hints, if any, for next steps, etc.

Some embodiments relate to a system for providing network visualization. The system generates one or more contexts for a user to select. The system receives a first context from the user. The system generates a user interface for displaying a first topology view for the first context. The topology view incudes a context centric connectivity view component, a context centric anomaly view component, and an entity centric key metric view component.

Some embodiments relate to a system for providing network visualization. The system includes one or more processors. The one or more processors are configured to generate a plurality of context types for a user to select, receive a first context of a first context type from the user, generate a first user interface for displaying a first topology view from the perspective of the first context, receive a second context of the first context type from the user, and generate a second user interface for displaying a second topology view from the perspective of the second context.

Some embodiments relate to one or more computer-readable storage media having instructions stored thereon that, when executed by one or more processors, cause the one or more processors to perform operations including: generating one or more contexts for a user to select, receiving a first context from the user, and generating a user interface for displaying a first topology view for the first context. The topology view includes a context centric connectivity view component, a context centric anomaly view component, and an entity centric key metric view component.

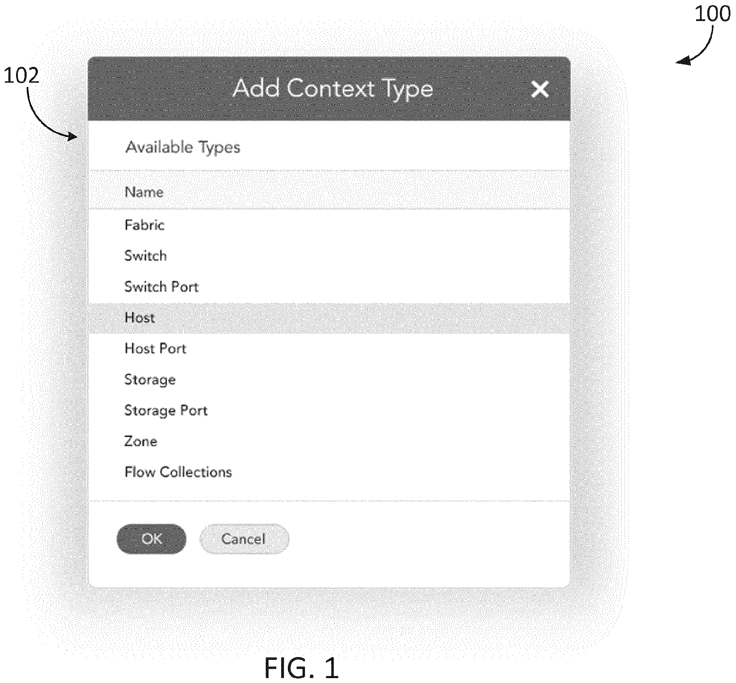

Referring to FIG. 1, an example view of a user interface 100 for adding context type is shown according to embodiments. In some embodiments, the systems and methods for context based multi-dimensional network visualization defines context as described above, such as Fabric, Zone, Switch, Switch Port, Host, Host Port, Storage, Storage Port, Flow Collections, Zone, etc. The user interface 100 provides a list of available context in a menu 102 for the user to select according to some embodiments. The list of available context includes any suitable and available context types (e.g., Name, Fabric, Switch, Switch Port, Host, Host Port, Storage, Storage Port, Zone, and Flow Collections) according to some embodiments.

The context type Fabric indicates any context that has characteristics as a fabric, such as a switched fiber channel fabric such as a collection of fiber channel switches that connect the individual devices in a many-to-many topology, or a storage fabric such as a collection of the many fiber channel switches that connect the individual devices (e.g., hosts, nodes) in a SAN according to some embodiments. The context type Switch indicates any context that has characteristics of a switch that connects devices together on a computer network by packet switching to receive, processes, and forward data to the destination device. The context type Switch Port indicates any context that has characteristics as a port within a switch that transmits and receives data packets between a medium interface and the switch. The context type Host indicates any context that has characteristics as a host device within a network, which can offer information resources, services, and applications to users or other nodes on the network. The context type Host Port indicates any context that has characteristics as a port within the host device. The context type Storage indicates any context that has characteristics as a storage device within a SAN. The context type Storage Port indicates any context that has characteristics as a port within a storage device. The context type Zone indicates context that has characteristics as a SAN zone within which server access is restricted to one or more storage devices. The context type Flow Collections indicates context that has characteristics as a port that connects devices within a network.

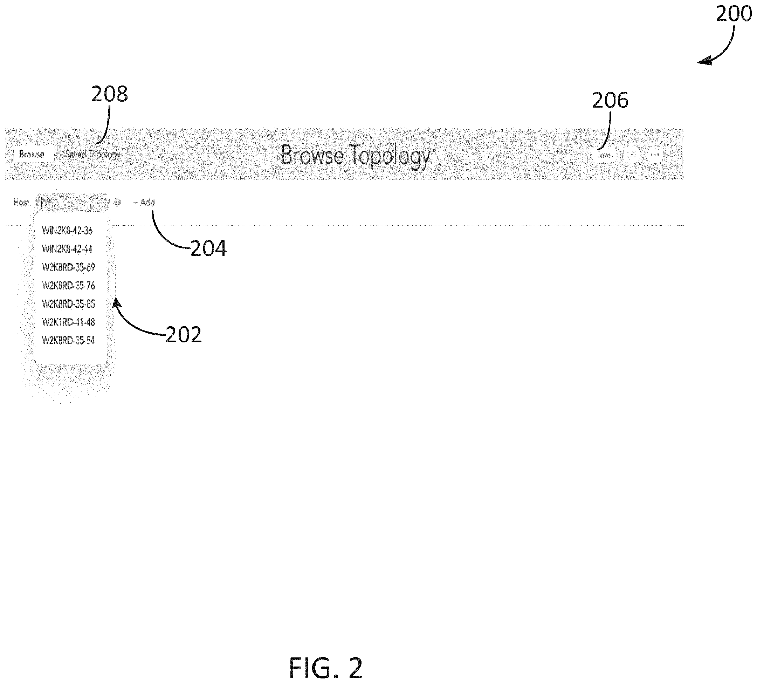

The user interface 100 can be provided on a computer, a mobile computing device, a work station, or other device. The user interface 100 as well as the other user interfaces 200-1500 in FIGS 2-15 are provided on a screen and can provide information on the screen according to the operation of one or more processors operating computer instructions. User input devices such as keyboards, touch screens, voice interfaces, and/or mouse devices, can be used to receive user selections and commands. In some embodiments, the system is employed as a web based system. The system can provide context based multi-dimensional network visualization on any node or devices within the network topology, such as a computer, smart phone, tablets, etc. The nodes can be stationary or mobile electronic equipment, including but not limited to computing devices, servers, drones, cameras, printers, personal devices, access points, internet of things (IOT) devices, automated vehicles, etc.

The user can select a context type for viewing a topology of the selected context type from the menu 102 using the user interface 100 according to some embodiments. For example, the user selects Host context type which is highlighted as shown in FIG. 1. Examples of topology views for each context of FIG. 1 are described below with reference to FIGs. 1-15.

Referring to FIG. 2, an example view of a user interface 200 for selecting a host context is shown according to some embodiments. In some embodiments, upon receiving the selection of a context type (e.g., user selecting a Host context type), the systems and methods for context based multi-dimensional network visualization generates the user interface 200 including a host context list 202 of available host context for the user to select according to some embodiments. In some embodiments, the context selecting user interface 200 includes an Add button 204 that allows the user to add one or more Host context to the host context list 202. In some embodiments, the context selecting user interface 200 includes a save button 206 that allows the user to save the selected context and context type, so that the user can easily view previously selected context type and context. In some embodiments, the user interface 200 further includes a save topology button 208 that allows the user to access the previously saved topology.

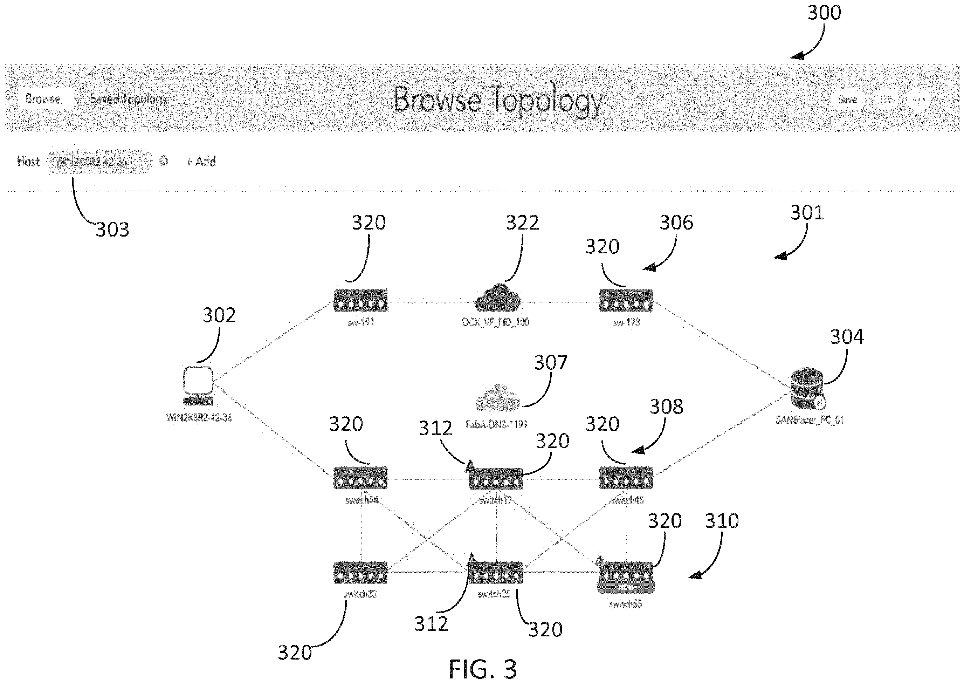

Referring to FIG. 3, an example user interface 300 for a user selected Host context is shown according to some embodiments. The user interface 300 is configured to enable the user to browse topology of the user selected host context according to some embodiments. The user interface 300 provides a network topology view 301 from the perspective of a user select host device 302 according to some embodiments. The network topology view 301 includes the host device 302, fabrics 307 and 322, a hybrid storage device 304 and switches 320 according to some embodiments. The host device 302 is connected to the hybrid storage device 304 through multiple paths (e.g., paths 306, 308, and 310) formed by multiple switches 320 according to some embodiments. In some embodiments, the switches 320 in the path 306 belong to the fabric 322. In some embodiments, the topology view only displays the switches 320 that are used in the network topology and collapses rest of the fabric 322 so that the user interface provides a cleaner and clearer looking topology view. In some embodiments, the network includes the fabric 307 which includes multiple switches that are not used in any paths within the network topology. The user interface 300 displays the fabric 307 alone with darker color to indicate that the fabric 307 is not in use in a current topology. In some embodiments, the network topology view 301 includes network information of each node on the paths 306, 308, and 310 (e.g., for each switch 320 in FIG. 3) within the network topology view 301. In some embodiments, the network information includes, but not limited to information related to network connection, utilization, availability, and performance.

In some embodiments, the user interface 300 generates and displays alert and/or warning signs to indicate a bad network connection at a corresponding node/entity (e.g., switch 320) in the network topology. For example, alert signs 312 and 314 are generated and displayed on the switch 17 and switch25 as indicating a bad network connection or on the switch55 indicating low performance according to some embodiments. A warning alert (e.g., sign 314 as a yellow symbol) is generated and displayed on the switch55 as indicating a performance issue according to some embodiments. The system measures and monitors network performance in real time and generates the topology view 301 and information of the network performance at each node of the network topology according to some embodiments. In some embodiments, the network performance is determined using any suitable factors.

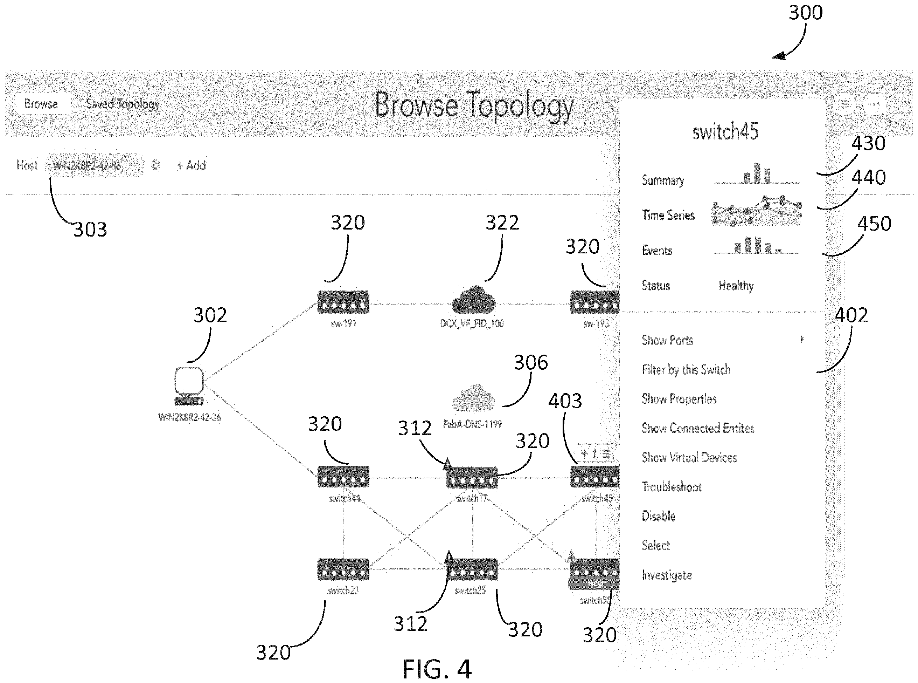

Referring to FIG. 4, an example view of the user interface 300 displaying the network topology for a user selected Hot context is shown according to some embodiments. The user interface 300 enables the user to access all the network information for each entity or node within the network topology. In some embodiments, the user interface 300 enables the user to click on a selected node (e.g., node 403 - switch45) and generates a pop-up window (e.g., pop-up window 402) in the user interface 300 to present the network information. The pop-up window displays an entity centric key metrics view according to some embodiments. For example, when a user selects a node (e.g., the node 403 in FIG. 4), the user interface 300 displays the node in a different color as indication of the selection according to some embodiments. The user interface 300 provides detailed information for each node within the network topology in a pop-up window similar to the window 402 according to some embodiments. For example, the pop-up window 402 provides options for the user to select and view detailed network information for each selected node or switch 320. In some embodiments, the detailed information includes, but not limited to, summary, time series, events, status, etc. In some embodiments, the system provides options for the user to view ports, filter information, view properties, connected entities, and virtual devices, etc. The summary includes a summary of network performance represented by a graph 430 according to some embodiments. The graph 430 shows a total count of each kinds of activities the node has performed according to some embodiments. The time series of network activities at the selected node is represented by a graph 440 according to some embodiments. The graph 440 shows total activities the node performed along the time series according to some embodiments. The graph 450 shows a total count of each type of events that happened on the node according to some embodiments. In some embodiments, the events can include different types of events such as success in data transmission, error in data transmission, alert report, etc. The status indicates a performance level of the node, such as healthy, weak, etc.

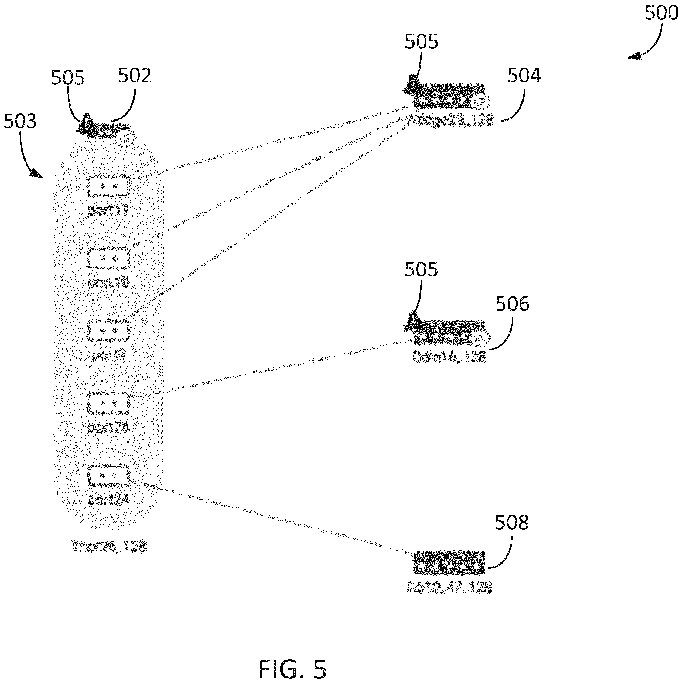

FIG. 5 is an example user interface 500 providing drill down and/or drill up network topology of an entity within a network topology according to some embodiments. A network topology view 501 shows multiple switches (e.g., switches 502, 504, 506, and 508) according to some embodiments. The user interface 500 enables the user to select an entity (e.g., switch 502, host, or storage entity) and displays all the ports 503 of the selected entity according to some embodiments. For example, the switch 502 is selected by the user, the user interface 500 provides a view of all the ports 503 (e.g., port 11, port 10, port 9, port 26, and port 24) and connections between each port and one or more other entities (e.g., switches 504, 506, 508) according to some embodiments. For example, the user interface 500 displays connections between the port11, port 10, port 9 and the switch 504, a connection between the port 26 and the switch 506, a connection between the port24 and the switch 508 according to some embodiments. In some embodiments, the switches 502, 504, 506, and 508 can be any suitable switches within the network topology, such as switch (fixed ports), virtual switch, etc.

In some embodiments, the user interface 500 generates and displays alert and/or warning signs to indicate a bad network connection at a corresponding node/entity (e.g., switches 502, 504, and 506) in the network topology. For example, alert signs 505 are generated and displayed on the switches 502, 504, and 506 as indicating a bad network connection or low performance according to some embodiments. The system measures and monitors network performance in real time and generates the topology view 501 and information of the network performance at each node of the network topology view 501 according to some embodiments. In some embodiments, the network performance is determined using any suitable factors.

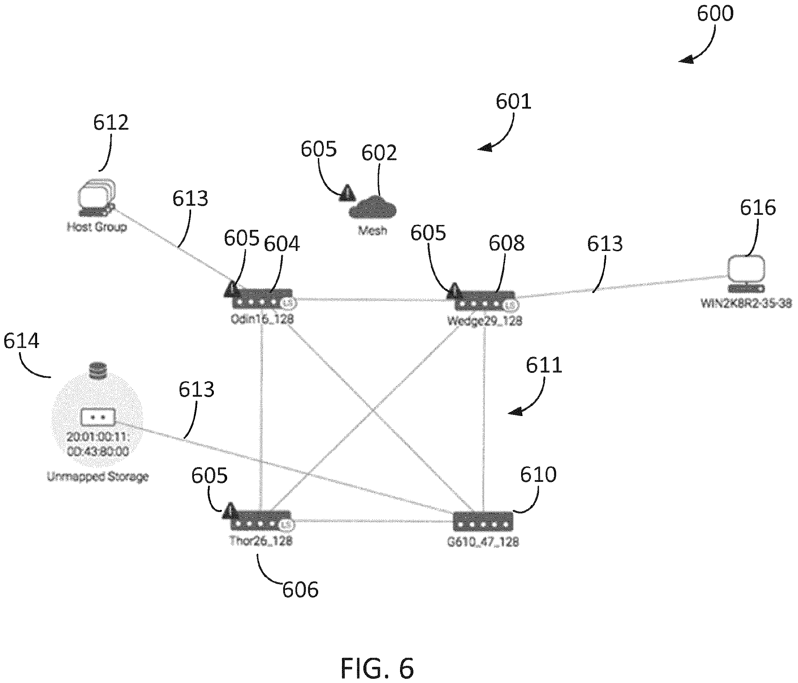

FIG. 6 is an example user interface 600 displaying a fabric context topology of a mesh or fabric 602 according to some embodiments. A fabric context topology view 601 shows multiple switches (e.g., switches 604, 606, 608, and 610) within the fabric 602, a host group 612, unmapped storage 614, and a host device 616 and displays the connectivity between all the switches and devices (Hosts and Storages) in the fabric 602 from the perspective of the fabric 602 according to some embodiments. The topology view 601 shows all the connections 611 between the switches according to some embodiments. For example, each of the switches 604, 606, 608, and 610 is connected to each of the switches 604, 606, 608, and 610 according to some embodiments.

The topology view 601 also shows connections 613 between the switches 604, 606, 608, 610 and other devices (e.g., the host group 612, unmapped storage 614, and the host device 616) according to some embodiments. In some embodiments, the user interface 600 enables the user to select showing/hiding connected devices including virtual devices. When opted to show devices (e.g., the host group 612, unmapped storage 614, and the host device 616), the devices are displayed with the connectivity to the switches (e.g., switches 604, 606, 608, and 610) according to some embodiments. The topology view 601 can be auto scaled/collapsed, as/if needed to fit the connectivity view of the devices according to some embodiments. For example, the topology view 601 shows that the switch 604 is connected to the host group 612, the switch 608 is connected to the host device 616, and the switch 610 is connected to a port of the storage 614 according to some embodiments.

The user interface 600 can be customized to not show or remove connected devices (e.g., the host group 612, unmapped storage 614, and the host device 616) by default for large fabrics unless when launched from troubleshooting or other specific contexts according to some embodiments. If the fabric 602 is involved in a Meta-SAN (FCR setup), the connected edge and/or backbone fabrics can be automatically detected and displayed showing the connectivity according to some embodiments. The connected fabric(s) will be collapsed and represented and the user can then proceed to drill-down, expand/display the connected switches, devices and connectivity links for each fabric according to some embodiments. The user interface 600 allows the user to easily change context to any of the associated zones in the fabric and view the topology centric to a zone context topology according to some embodiments.

In some embodiments, the user interface 600 generates and displays alert and/or warning signs to indicate a bad network connection at a corresponding node/entity (e.g., switches 604, 606, and 608) in the topology view 601. For example, alert signs 605 are generated and displayed on the switches 604, 606, and 608 as indicating a bad network connection or low performance according to some embodiments. The system measures and monitors network performance in real time and generates the topology view 601 and information of the network performance at each node of the topology view 601 according to some embodiments. In some embodiments, the network performance is determined using any suitable factors.

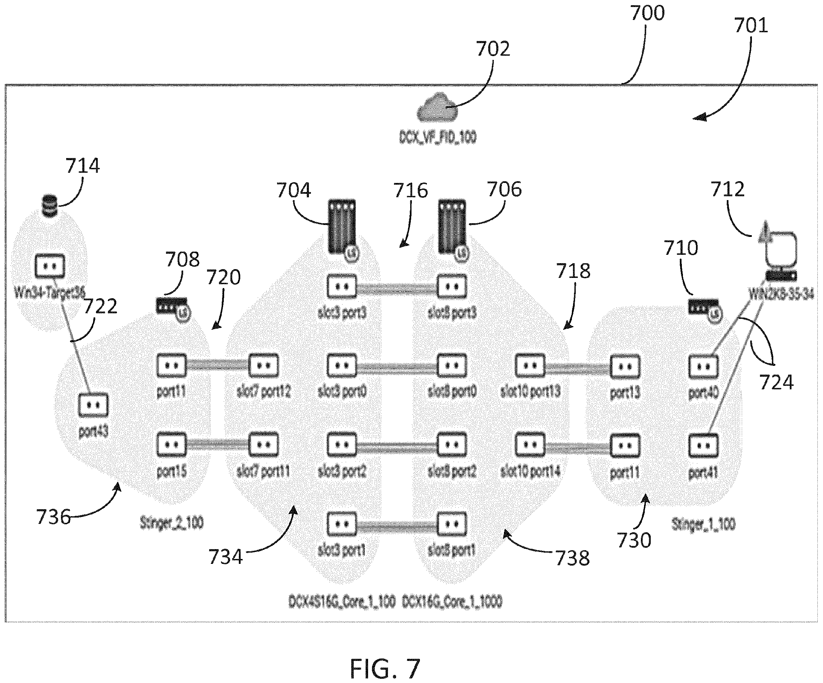

FIG. 7 is an example user interface 700 displaying a topology of a fabric 702 according to some embodiments. A fabric topology view 701 includes a fabric 702, a host device 712, and a storage 714 according to some embodiments. The fabric 702 includes multiple nodes including switch directors 704 and 706 and switches 708 and 710 according to some embodiments. The switch director 704 includes one or more slots of ports 734 according to some embodiments. The switch director 706 includes one or more slots of ports 738 according to some embodiments. The switch 708 includes one or more slots of ports 736 according to some embodiments. The switch 710 includes one or more slots of ports 730 according to some embodiments. The user interface 700 allows the user to drill-down at each node within the topology 701 and displays all the ports within a corresponding node switch according to some embodiments. The user interface 700 also allows the user to collapse and hide all the ports and provide options for the user to click on the node and display all the hidden ports according to some embodiments.

The topology 701 displays connections within the fabric 702 according to some embodiments. The connections within the fabric 702 include connections 720 between the switch 708 and the switch director 704 and connections 718 between the switch 710 and the switch director 706 according to some embodiments. The topology 701 also displays connections between one or more ports of the fabric 702 to one or more devices according to some embodiments. For example, the switch 708 includes port 43, port 11, and port 15 and a connection 722 between the port 43 and the storage 714 according to some embodiments. In another example, the switch 710 includes ports 40 and 4, and connections 724 between the ports 40 and 41 and the host device 712 according to some embodiments.

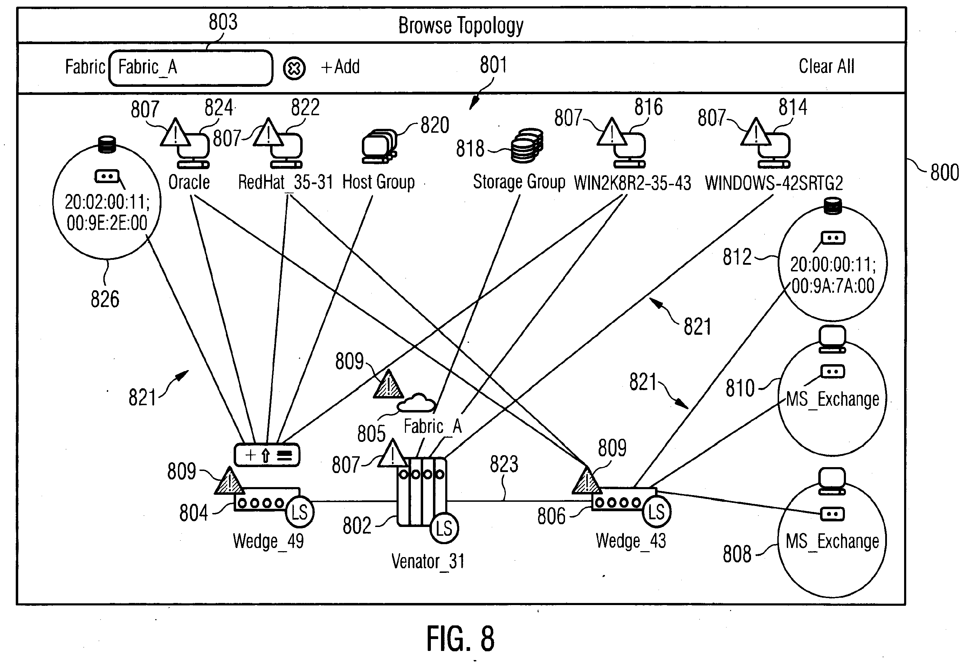

FIG. 8 is an example user interface 800 displaying a topology in a fabric 805 according to some embodiments. Upon the user selecting the fabric 805 at an input 803, the user interface 800 displays a topology view 801 from the perspective of the fabric 805 according to some embodiments. The topology view 801 includes the fabric 805, host devices 808, 810, 814, 816, 824 and 822, host group 820, storage group 818, and storages 812 and 826 according to some embodiments. The fabric 805 includes multiple nodes (e.g., switches 804 and 806 and a switch director 802) according to some embodiments. In some embodiments, the topology view 801 displays the nodes that have bad connections to the user by default and displays other active nodes by request of the user according to some embodiments. The topology view 801 includes connections 821 between one or more nodes of the fabric 805 and one or more devices according to some embodiments. For example, the topology view 801 includes connections 821 between the switch 804 and host devices 816, 824 and 822, host group 820, and a storage 826 according to some embodiments. The topology view 801 further includes connections 821 between the switch 806 and the host devices 822 and 824, a storage 812, and ports of host devices 808 and 810 according to some embodiments. The topology view also includes connections 821 between the switch director 802 and a storage group 818 and host devices 816 and 814 according to some embodiments. The topology view 801 includes connections 823 between the nodes within the fabric 805 according to some embodiments. For example, the topology view 801 displays the connection 823 between the switch 804 and the switch director 802 according to some embodiments.

In some embodiments, the user interface 800 generates and displays alert and/or warning signs to indicate a bad network connection at a corresponding node/entity (e.g., switches 804 and 806, fabric 805) in the network topology. For example, alert signs 809 are generated and displayed on the switches 804, 806, and the fabric 805 as indicating a bad network connection or low performance according to some embodiments. A warning alert (e.g., sign 807 as a yellow symbol) is generated and displayed on the host devices 822, 824, 814, and 816 as indicating a performance issue according to some embodiments. The system measures and monitors network performance in real time and generates the topology view 801 and information of the network performance at each node of the network topology 801 according to some embodiments. In some embodiments, the network performance is determined using any suitable factors.

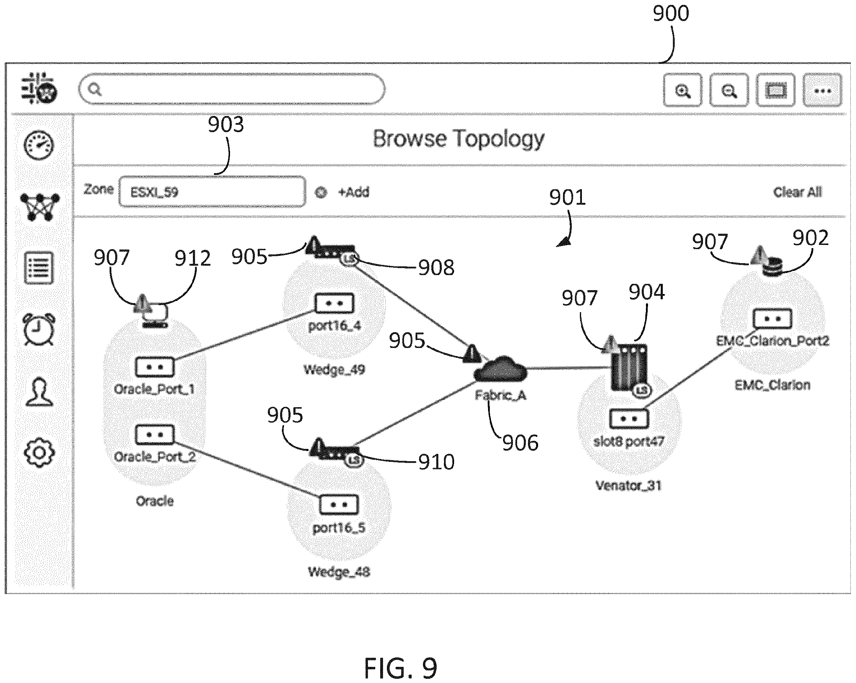

FIG. 9 is an example user interface 900 providing a topology in a zone context according to some embodiments. A topology view 901 in a zone context (e.g. identified at an input 903) includes multiple nodes including a host device 912, a fabric 906, and a storage 902 according to some embodiments. The fabric 906 includes switches 908 and 910, and a switch director 904 according to some embodiments. The topology view 901 displays one or more ports for each node according to some embodiments. The topology view 901 displays the connectivity (from the perspective of the zone) between all the zoned devices (e.g., the storage 902, the fabric 906, the host device 912) along with their immediate connected switches (e.g., switches 908 and 910, and the switch director 904) in the zone according to some embodiments. The rest of the fabric(s) (e.g., fabric 906) that the switches (e.g., the switches 908 and 910 and the switch director 904) belong to is collapsed to be represented as the fabric 906 so that only the switches connected to the zone context is shown in the topology view 901 according to some embodiments.

For LSAN zones (FCR), the topology view 901 is automatically detected and displays the end-to-end connectivity across all the edge and backbone fabrics where the zoned member devices are present according to some embodiments. The user interface 900 provides to the user options to show/hide virtual devices according to some embodiments. The user interface 900 enables the user to expand and build zone context from any switch, host or storage entity in the topology view using an option to view the directly connected entities for each switch according to some embodiments. For example, in some embodiments the user interface 900 allows the user to expand and build zone context from the switch 908 using an option to view the immediately connected host device 912. In addition, the user interface 900 also enables the user to easily change context to any of the zone associated fabrics and view the fabric centric topology (fabric context topology) according to some embodiments. For example, the user can select the fabric 906 and switch the current zone topology view to a fabric topology view (e.g., fabric topology view as shown in FIG. 8) from the perspective of the fabric 906 according to some embodiments.

In some embodiments, the user interface 900 generates and displays alert and/or warning signs to indicate a bad network connection at a corresponding node/entity (e.g., switches 908 and 910, fabric 906) in the network topology. For example, alert signs 905 are generated and displayed on the switches 908, 910, and the fabric 906 as indicating a bad network connection or low performance according to some embodiments. A warning alert (e.g., sign 907 as a yellow symbol) is generated and displayed on the host device 912, the switch director 904, and the storage 902 as indicating a performance issue according to some embodiments. The system measures and monitors network performance in real time and generates the topology view 901 and information of the network performance at each node of the topology view 901 according to some embodiments. In some embodiments, the network performance is determined using any suitable factors.

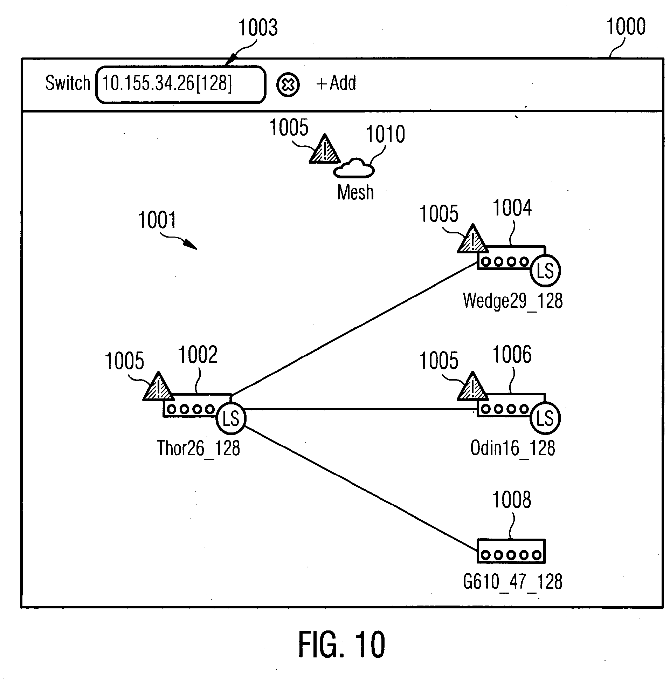

FIG. 10 is an example user interface 1000 displaying a topology view 1001 in a switch context according to some embodiments. The topology view 1001 includes a fabric 1010 and switches 1002, 1004, 1006, and 1008 according to some embodiments. The user interface 1000 launches the topology view 1001 in a switch context for the switch 1002 identified at an input 1003. The topology view 1001 displays the connectivity between the switch 1002 and its connected switches 1004, 1006, and 1008, and devices (not shown) from the perspective of the switch 1002 according to some embodiments. The switch 1002 and its connected switches 1004, 1006, and 1008 belong to the fabric 1010 according to some embodiments. In the topology view, the fabric 1010 is collapsed and represented such that only switches connected to the switch 1002 are shown from the perspective of the switch 1002 according to some embodiments.

In some embodiments, if the switch 1002 is a router or is connected to a router as part of a Meta-SAN (FCR setup), the corresponding edge and backbone fabrics (not shown) are automatically detected and displayed seamlessly on the topology view 1001 to show the connectivity.

The user interface 1000 enables the user to show/hide connected devices including virtual devices according to some embodiments. When opted to show devices, the devices are displayed with the connectivity to the switch 1002 which can be auto scaled/collapsed, as or if needed to fit the topology view 1001 according to some embodiments.

The user interface 1000 also enables the user to expand and build context from any switch, host or storage entity in the connectivity view using an option to view the directly connected entities for each entity within the topology according to some embodiments. For example, for the switch1002, the user can build context from any of the immediately connected switches 1004, 1006, and 1008 according to some embodiments. The switches 1002, 1004, 1006, and 1008 belong to a fabric 1010 according to some embodiments. The fabric 1010 is displayed in the connectivity view according to some embodiments. In some embodiments, the switches that are connected to the switch 1002 are displayed and other switches of the fabric 1010 are collapsed in the icon fabric 1010 so that the user interface 1000 provides a clear view of the connectivity from the perspective of the switch 1002. In some embodiments, the user interface 1000 enables the user to change a topology view from the connectivity view to a fabric view. For example, since the associated fabric(s) (e.g., fabric 1010) is displayed in the user interface 1000, this enables the user to switch the topology view from the connectivity view to a fabric view by clicking the fabric 1010 according to some embodiments.

In some embodiments, the user interface 1000 generates and displays alert and/or warning signs to indicate a bad network connection at a corresponding node/entity (e.g., switches 1002, 1004, and 1006, fabric 1010) in the topology view 1001. For example, alert signs 1005 are generated and displayed on the switches 1002, 1004, 1006, and fabric 1010 as indicating a bad network connection or low performance according to some embodiments. The system measures and monitors network performance in real time and generates the topology view 1001 and information of the network performance at each node of the topology view 1001 according to some embodiments. In some embodiments, the network performance is determined using any suitable factors.

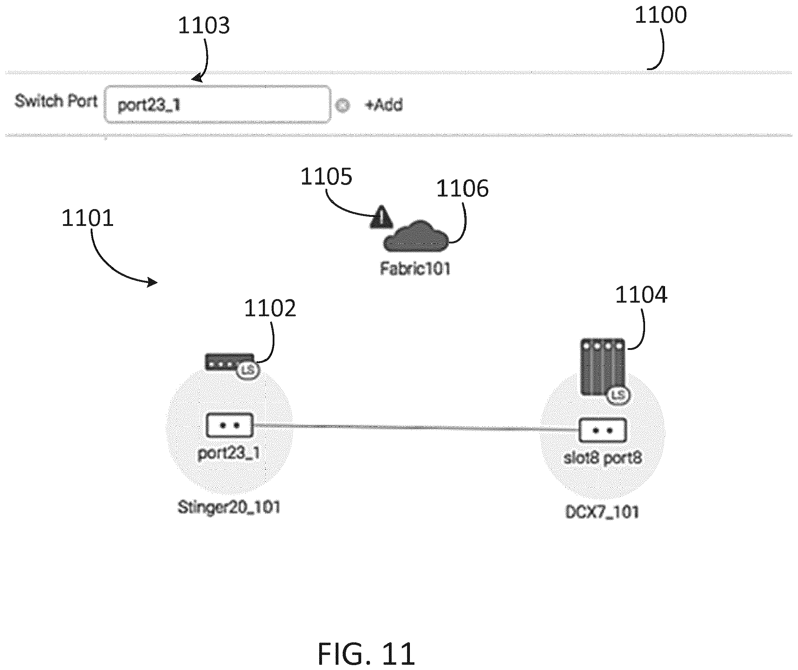

FIG. 11 is an example user interface 1100 displaying a topology view 1101 in a switch port context according to some embodiments. The user interface 1100 launches topology in a switch port context and displays a switch port topology view 1101 showing the connectivity between a port of a switch 1102 and its connected switch port(s) or device port(s) (e.g., a port of a switch director 1104) from the perspective of the port23_1 of the switch1102 according to some embodiments. The switch port topology view 1101 includes a fabric 1106, a switch 1102, and a switch director 1104 according to some embodiments. In some embodiments, the switch 1102 and the switch director 1104 belong to the fabric 1106. The hosting switches and devices (e.g., hosts and storages) are collapsed and represented as one or more host and storages icons (not shown) in the topology view 1101 to display only the chosen switch port connectivity according to some embodiments. The fabric(s) 1106 for the switch 1102 and the switch director1004 is also collapsed and represented as a cloud symbol so that in the switch port topology view 1101 only the port 23_1 of the switch 1102 and its connected port slot018 port 8 of the switch director 1104 are displayed according to some embodiments.

In some embodiments, if a port of the switch 1102 is connected to an edge/core AG port, the corresponding resulting connectivity is automatically detected and displayed seamlessly showing the connectivity according to some embodiments. Similarly, if a port of the switch 1102 is itself a router port or is connected to a router port as part of a Meta-SAN (FCR setup), the corresponding edge and backbone fabrics are automatically detected and displayed seamlessly showing the connectivity according to some embodiments.

The user interface 1100 enables the user to expand and build context from any switch, host or storage entity in the connectivity view using an option to view the directly connected entities for each entity within the switch port topology view 1101 according to some embodiments. For example, for a switch entity, this means all the immediately connected switches and devices can be used for building context according to some embodiments. Since the associated switches and fabric(s) are displayed, this enables easy context switch to these switches and fabrics to view their respective switch or fabric centric topology according to some embodiments.

In some embodiments, the user interface 1100 generates and displays alert and/or warning signs to indicate a bad network connection at a corresponding node/entity (e.g., port 23_1 of the switch 1102) in the topology view 1101. For example, alert sign 1105 is generated and displayed on the switch 1106 as indicating a bad network connection or low performance according to some embodiments. The system measures and monitors network performance in real time and generates the topology view 1101 and information of the network performance at each node of the topology view 1101 according to some embodiments. In some embodiments, the network performance is determined using any suitable factors.

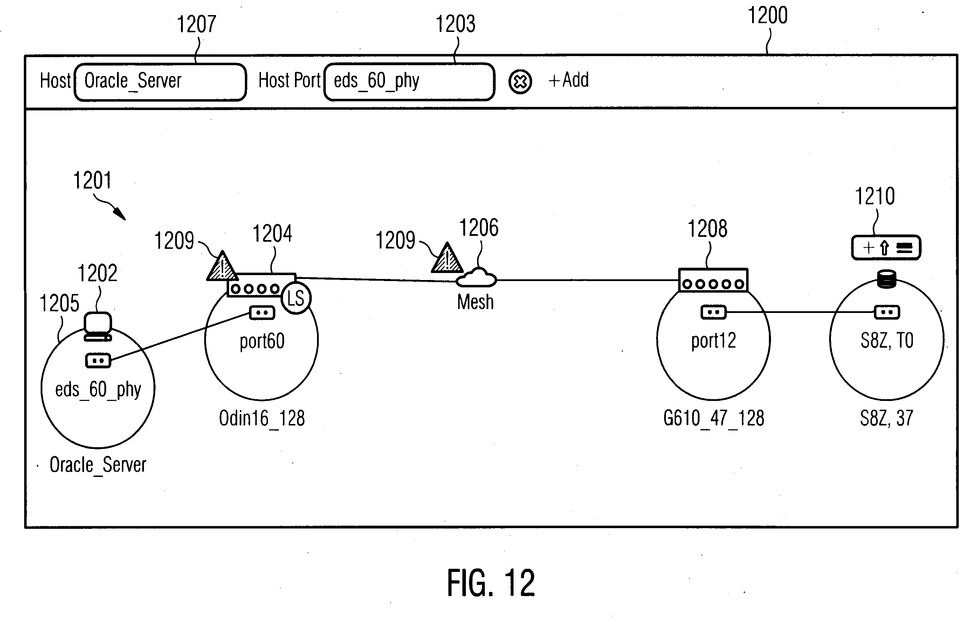

FIG. 12 is an example user interface 1200 displaying a topology view 1201 in a host port context according to some embodiments. The user interface 1200 launches the host port context topology view 1201 for the host port 1205 identified at an input 1203 of a host identified at an input 1207 and displays the connectivity from the perspective of the host port (e.g., a host port 1205 for a host device 1202) according to some embodiments. The host port context topology view 1201 includes the host device 1202, switches 1204 and 1208, a fabric 1206, and a storage 1210, and displays the connectivity between the host port 1205 and all its connected storage ports 1210 along with their immediate connected switch ports 1204 and 1206 according to some embodiments. The hosting switches and devices (e.g., hosts and storages) are collapsed and represented by a symbol for the fabric 1206 to display only the switch port connectivity for the host port 1205 according to some embodiments. The switches 1204 and 1208 belong to the fabric 1206 according to some embodiments. The rest of the fabric(s) 1206 is also collapsed and represented by the symbol for the fabric 1206 according to some embodiments. Similar to the host context in FIGs 1-4, the user interface 1200 enables the user to view and understand all the connectivity path(s) (through respective fabric(s) 1206) between the host port 1202 and its connected storage port 1210 according to some embodiments.

The user interface 1200 also provides the user options to show/hide virtual devices according to some embodiments. The user interface 1200 also enables the user to expand and build context from any switch, host or storage entity in the connectivity view using an option to view the directly connected entities for each entity within the host port topology view according to some embodiments. For example, for a switch entity (e.g., switch 1208), this means all the immediately connected switches (e.g., switch 1204) and devices (e.g., storage 1210) can be used for building context according to some embodiments. In addition, the user interface 1200 also enables the user to easily change context to one of the zones or IT flows that the host port or device 1202 is associated with and view the topology centric to it (zone or flow context topology) according to some embodiments.

In some embodiments, the user interface 1200 generates and displays alert and/or warning signs to indicate a bad network connection at a corresponding node/entity (e.g., switch 1204, fabric 1206) in the topology view 1201. For example, alert signs 1209 are generated and displayed on the switch 1204 and the fabric 1206 as indicating a bad network connection or low performance according to some embodiments. The system measures and monitors network performance in real time and generates the topology view 1201 and information of the network performance at each node of the topology view 1201 according to some embodiments. In some embodiments, the network performance is determined using any suitable factors.

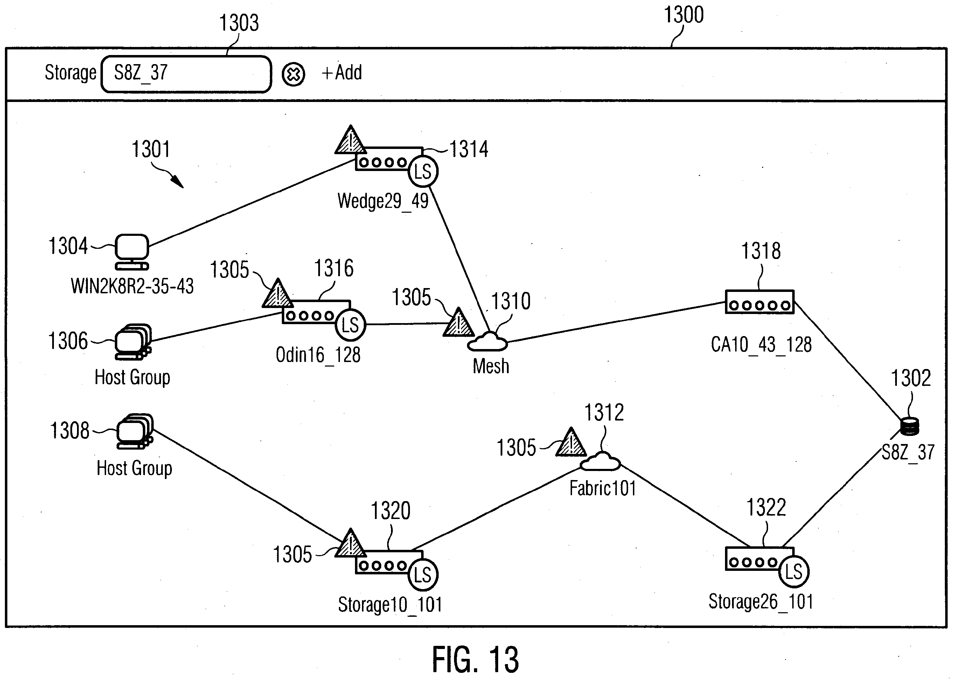

FIG. 13 is an example user interface 1300 displaying a topology for a storage context according to some embodiments. The user interface 1300 is similar as the user interfaces 100-1200 described above with respect to FIGs. 1-12 according to some embodiments. The user interface 1300 includes a storage context topology view 1301 which includes a storage 1302, a host device 1304, host groups 1306 and 1308, a fabric 1318, and a fabric 1312. The storage context topology view 1301 displays connections between a user selected storage at an input 1303 (e.g., storage 1302) and its connected devices (e.g., host group device 1304, 1306, and 1308) through one or more switches (e.g., switches 1314, 1316, 1318, 1320, and 1322) of one or more fabrics (e.g., fabric 1310 and 1312) according to some embodiments. In some embodiments, the fabric 1310 includes the switches 1314, 1316, and 1318. In some embodiments, the fabric 1312 includes the switches 1320 and 1322. In some embodiments, the fabric 1310 connects the storage 1302 with the host device 1304 and the host group 1306. In some embodiments, the fabric 1312 connects the storage 1302 with the host group 1308. In some embodiments, the user interface 1300 only displays the connected switches of the fabrics and collapses the rest switches or other devices of the fabrics in order to provide a clearer topology view 1301 in for the storage context.

In some embodiments, the user interface 1300 generates and displays alert and/or warning signs to indicate a bad network connection at a corresponding node/entity (e.g., switches 1314, 1316, and 1320, fabric 1310) in the topology view 1301. For example, alert signs 1305 are generated and displayed on the switches 1314, 1316, 1320, fabric 1310 as indicating a bad network connection or low performance according to some embodiments. The system measures and monitors network performance in real time and generates the topology view 1301 and information of the network performance at each node of the topology view 1301 according to some embodiments. In some embodiments, the network performance is determined using any suitable factors.

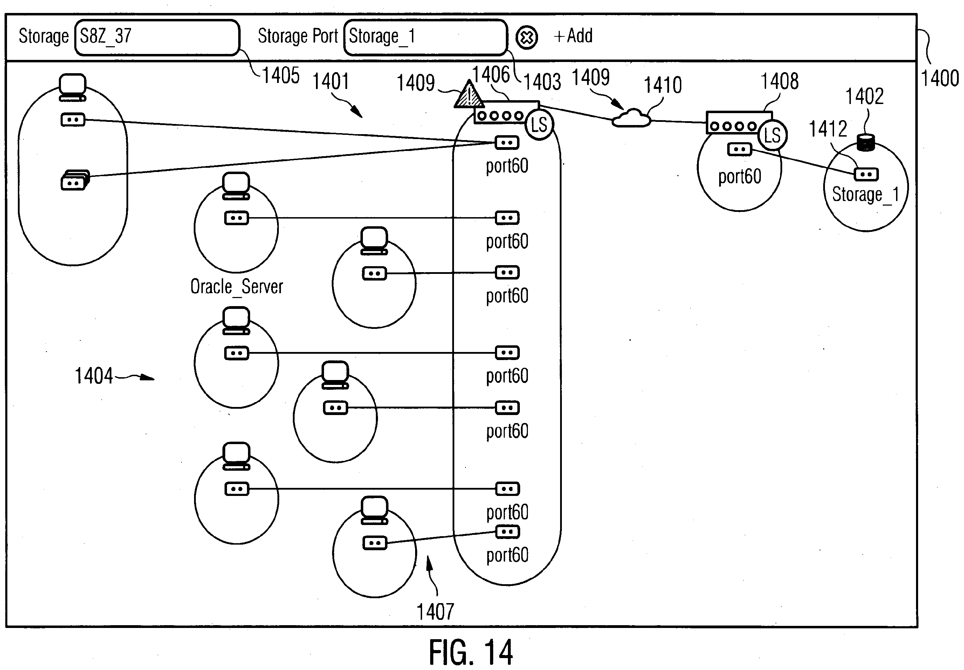

FIG. 14 is an example user interface 1400 displaying a topology for a storage port context according to some embodiments. The user interface 1400 is similar as the user interfaces 100-1300 described above with respect to FIGs. 1-13 according to some embodiments. The user interface 1400 provides a topology view 1401 which includes one or more host ports 1404, a storage 1402, a fabric 1410, switches 1406 and 1408 according to some embodiments. The topology view 1401 displays connections 1407 between a storage port 1412 of the storage 1402 (e.g., selected at an input 1403 for a storage device 1408 (e.g., selected at an input 1405) and one or more ports of connected devices (e.g., host ports 1404) through one or more switches (e.g., switches 1406 and 1408) of one or more fabrics (e.g., fabric 1410) according to some embodiments. In some embodiments, the fabric 1410 includes the switch 1406 and the switch director 1408. The user interface 1400 displays all the ports that are used for connecting the storage port 1402 and other devices ports according to some embodiments. For example, the user interface 1400 displays all the ports of the switch 1406 that are in use for connecting the storage port 1402 and the one or more host ports 1404 according to some embodiments.

In some embodiments, the user interface 1400 generates and displays alert and/or warning signs to indicate a bad network connection at a corresponding node/entity (e.g., switch 1406, fabric 1410) in the topology view 1401. For example, alert signs 1409 are generated and displayed on the switch 1406 and the fabric 1410 as indicating a bad network connection or low performance according to some embodiments. The system measures and monitors network performance in real time and generates the topology view 1401 and information of the network performance at each node of the topology view 1401 according to some embodiments. In some embodiments, the network performance is determined using any suitable factors.

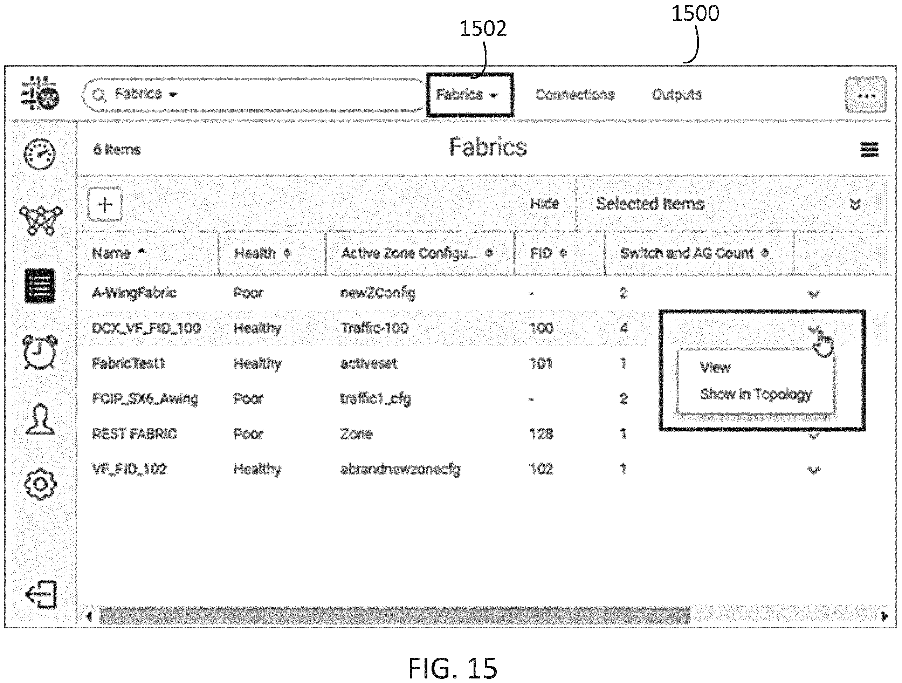

FIG. 15 is an example user interface 1500 providing information of a user selected context in a network according to some embodiments. The user interface 1500 includes a drop down window 1502 displaying a list of available contexts that enables the user to select a context (e.g., fabric context) according to some embodiments. Upon receiving a user selection of context, the user interface 1500 displays an integrated table for presenting information of the user selected context according to some embodiments. For example, when the user selects fabric context, the user interface 1500 displays integrated fabric information of all the active fabrics within the network according to some embodiments. In some embodiments, the integrated fabric information for each fabric includes, but not limited to, name, health, active zone configuration, fabric ID, switch and AG count, etc. The user interface 1500 enables the user to select any available fabric in the table to display a topology of the fabric from the perspective of the fabric according to some embodiments.

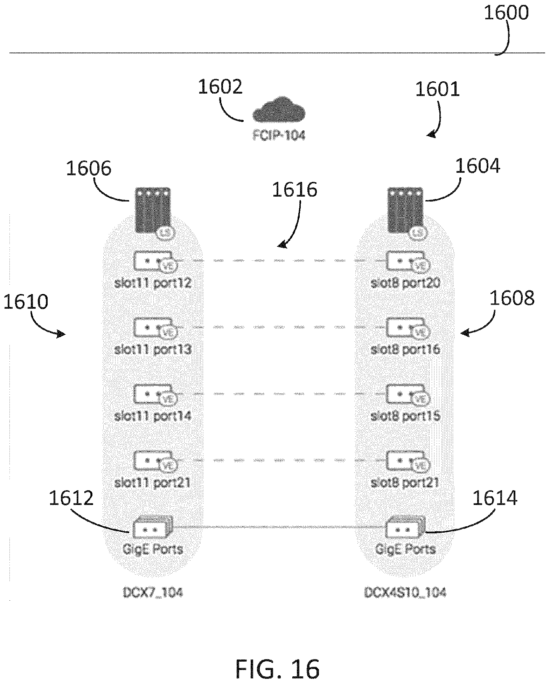

FIG. 16 is an example user interface 1600 displaying a switch expansion view 1601 in a fiber channel over IP protocol (FCIP) Tunnel according to some embodiments. The switch expansion view 1601 includes a fabric 1602, switches 1604 and 1606 according to some embodiments. In some embodiments, the switch 1604 includes one or more ports 1608, and the switch 1606 includes one or more ports 1610. In some embodiments, the switches 1604 and 1606 belong to the fabric 1602. In some embodiments, the switch 1604 includes GigE ports 1612, and the switch 1604 includes GigE ports 1614. In some embodiments, the switch expansion view 1601 displays links 1606 between the ports 1608 and 1010 individually. In some embodiments, the user interface 1600 enables the user to select a port in the switch expansion view 1601 and generates a pop-up window to display information of the user selected port. In some embodiments, the information of the user select port includes, but not limited to a port name, port number, slot number, network connection speed (e.g., 1 Gb/s) at the port, status of the port (e.g., online, offline).

In some embodiments, the systems and methods provided in the present disclosure provides user interfaces for displaying a topology for any user selected context in a similar way as the user interfaces discussed above with respect to FIGs. 1-15 according to some embodiments. For example, in some embodiments, the systems can provide user interfaces for displaying topology view of various other contexts, such as flow context, collection context, host bus adapter (HBA) context, virtual machine (VM) context, data center context, etc. The system and methods advantageously solve a problems presented by large networks, enabling efficient monitoring of performance and access to more granular data to according to some embodiments.

It should be understood that the systems described above may provide multiple ones of any or each of those components and these components may be provided on either a standalone machine or, in some embodiments, on multiple machines in a distributed system. In addition, the systems and methods described above may be provided as one or more computer-readable programs or executable instructions embodied on or in one or more articles of manufacture. The article of manufacture may be a floppy disk, a hard disk, a CD-ROM, a flash memory card, a PROM, a RAM, a ROM, or a magnetic tape. In general, the computer-readable programs may be implemented in any programming language, such as LISP, PERL, C, C++, C#, PROLOG, or in any byte code language such as JAVA. The software programs or executable instructions may be stored on or in one or more articles of manufacture as object code.

While the foregoing written description of the methods and systems enables one of ordinary skill to make and use what is considered presently to be the best mode thereof, those of ordinary skill will understand and appreciate the existence of variations, combinations, and equivalents of the specific embodiment, method, and examples herein. The present methods and systems should therefore not be limited by the above described embodiments, methods, and examples, but by all embodiments and methods within the scope and spirit of the disclosure.

## Claims

1. A system for providing network visualization, comprises:
one or more processors configured to:
generate one or more contexts for a user to select;
receive a first context from the user; and
generate a user interface for displaying a first topology view for the first context, wherein the first topology view comprises a context centric connectivity view component, a context centric anomaly view component, and an entity centric key metric view component.

2. The system of claim 1, wherein the one or more contexts comprises fabric, zone, switch, switch port, host, host port, storage, storage port, virtual machine, data center, flor/port collections, initiator target (IT) Flow, fiber channel over IP protocol (FCIP) Tunnel.

3. The system of claim 1, wherein the first topology view comprises one or more entities associated with the first context.

4. The system of claim 3, wherein the context centric connectivity view component displays the one or more entities, properties of the one or more entities, connections between the one or more entities of the first context and one or more other entities, traffic flow/utilization, alarm badges, and/or health score.

5. The system of claim 4, wherein the one or more other entities belong to a different context.

6. The system of claim 5, the one or more processors are configured to:
receive a user request to display a second topology view from the perspective of an entity of the first context; and
switch, at the user interface, from the first topology view to the second topology view.

7. The system of claim 5, the one or more processors are configured to:
receive a user request to display a third topology view from the perspective of an entity of a second context; and
switch, at the user interface, from the first topology view to the third topology view.

8. The system of claim 1, wherein the context centric anomaly view component displays one or more anomalies associated with the first context, wherein the one or more anomalies comprise anomalous entities, trends, and patterns.

9. The system of claim 3, wherein the entity centric key metrics view component displays summary and spark lines for key metrics, event summaries, and/or health details for the one or more entities.

10. A system for providing network visualization, comprises:
one or more processors configured to:
generate a plurality of context types for a user to select;
receive a first context of a first context type from the user;
generate a first user interface for displaying a first topology view from the perspective of the first context;
receive a second context of the first context type from the user; and
generate a second user interface for displaying a second topology view from the perspective of the second context.

11. The system of claim 10, wherein the plurality of context types comprises fabric, zone, switch, switch port, host, host port, storage, storage port, virtual machine, data center, flor/port collections, initiator target (IT) Flow, fiber channel over IP protocol (FCIP) Tunnel.

12. The system of claim 10, wherein the one or more processors are configured to:
receive a third context of a second context type from the user; and
generate a third user interface for displaying a third topology view from the perspective of the third context.

13. The system of claim 12, wherein each of the first, second, and third topology views comprises one or more entities, wherein each of the one or more entities is associated with a context.

14. The system of claim 13, wherein the one or more processors are configured to:
for each entity,
monitor and measure network performance; and
in response to determining a bad network connection, generate and display an alert and/or waring sign at the entity.

15. One or more computer-readable storage media having instructions stored thereon that, when executed by one or more processors, cause the one or more processors to perform operations comprising:
generating one or more contexts for a user to select;
receiving a first context from the user; and
generating a user interface for displaying a first topology view for the first context, wherein the first topology view comprises a context centric connectivity view component, a context centric anomaly view component, and an entity centric key metric view component.
